# EUROPÄISCHE PATENTSCHRIFT

(11) **EP 1 166 934 B1**
(45) Veröffentlichungstag und Bekanntmachung des Hinweises auf die Patenterteilung: **03.05.2006**
(21) Anmeldenummer: 01113484.8
(22) Anmeldetag: 02.06.2001
(51) Int. Cl.: B23D 35/00

(54) **Hochgeschwindigkeitsschere mit einstellbaren Messertrommeln**
Flying shear with adjustable cutting drums
Cisaille volante avec cylindres de coupe réglables

(30) Priorität: 27.06.2000 DE 10030309; 26.04.2001 DE 10120617
(43) Veröffentlichungstag der Anmeldung: 02.01.2002
(73) Patentinhaber: SMS Demag AG, 40237 Düsseldorf (DE)
(72) Erfinder: Merz, Jürgen, 57223 Kreuztal (DE); Berger, Maik, Dr., 57250 Netphen (DE)
(74) Vertreter: Valentin, Ekkehard

(56) Entgegenhaltungen:
- US-A- 1 948 139
- US-A- 6 032 560

## Beschreibung

Die Erfindung betrifft eine Hochgeschwindigkeitsschere zum Teilen von Kalt- und/oder Warmband mittels wenigstens einer Messertrommel, die in einem Scherengehäuse anstellbar gelagert ist und die von einer Trommelwelle antreibbar ist, welche ihrerseits mit einem Drehantrieb in Verbindung steht, nach dem Oberbegriff von Anspruch 1. Eine derartige Schere ist aus dem Dokument US-A-6 032 560 bekannt.

Hochgeschwindigkeitsscheren zum Querteilen von in Walzgerüsten warm- und/oder kaltgewalztem Walzband sind in unterschiedlichen Ausführungen bekannt.

Die deutsche Offenlegungschrift DE 197 46 528 A beschreibt eine Hochgeschwindigkeitsschere, umfassend zwei Trommeln, von welchen eine mit einem Meißelmesser und die andere mit einem damit zusammenwirkenden Amboss ausgestattet bzw. als solcher ausgebildet ist. Mit Hilfe einer gesteuerten Stellvorrichtung werden beide Trommeln zum Trennvorgang eines durchlaufenden Walzbandes gegeneinander bewegt. Eine Synchronisierung der beiden Trommel erfolgt mittels elektrischen, elektronischen oder getriebetechnischen Mitteln.

Die EP 0 904 877 A2 offenbart eine Hochgeschwindigkeitsschere mit Messertrommeln von geringfügig unterschiedlichen Durchmessern, die mit Geschwindigkeitsdifferenz über ein externes Verzweigungsgetriebe angetrieben werden. Mit Hilfe einer Anstellvorrichtung über Spreizhebel werden die Trommeln bei gegenüberliegender Position der Messer in Schneidposition gebracht und nach erfolgtem Schnitt des Walzbandes wieder voneinander wegbewegt.

Die deutsche Offenlegungsschrift 26 54 866 beschreibt eine fliegende Schermaschine der Drehtrommelbauart mit rotativ miteinander gekoppelten Messertrommeln. Die Schere umfaßt eine Trommeldrehvorrichtung mit einer beide Trommeln koppelnden Kraftübertragung für Geschwindigkeiten synchron mit der Laufgeschwindigkeit des zugeführten Materials, weiterhin eine Trommelstellvorrichtung zum Verstellen einer Schertrommel zwischen einer geöffneten Position und einer Schneidposition, sowie eine Steuereinrichtung für den Motor der Stellvorrichtung, welche das Anlaufen der ersten Schertrommel sowie das Anstellen in die Schneidposition und das Rückbewegen der Trommel in die Ausgangsstellung steuert.

Die erste und zweite Messertrommel weisen ein Durchmesserverhältnis von 2 zu 3 auf und sind beispielsweise so übersetzt, daß drei Umdrehungen der ersten Trommel auf zwei Umdrehungen der zweiten Trommel entfallen und die Trommelstellvorrichtung so gesteuert wird, daß jeweils die erste Trommel nach 6 Umdrehungen und die zweite Trommel nach 4 Umdrehungen zu einem Schneidvorgang zusammentreffen.

Wie aus dieser Veröffentlichung hervorgeht, ist der konstruktive Aufwand sowohl für die koppelnde Kraftübertragung als auch für die Trommelstellvorrichtung sowie für die hierfür benötigte Steuereinrichtung außerordentlich groß und störanfällig. Bei der Kraftübertragung sind 5 Zahnränder miteinander in Eingriff, so daß hierdurch verursachtes Spiel der Zahnflanken zu einer Winkelabweichung der miteinander zu koordinierenden Stellungen der Trommelmesser und damit zu Beschädigung sowohl der Schere als auch zu unsauberen Trennschnitten führen kann.

Die EP 0 990 478 A1 beschreibt kontinuierlich rotierbare Scheren, um ein ebenfalls kontinuierlich zugeführtes Metallband mit ca. 20 m/sec bei einer Dicke von 0,5 bis 5 mm und einer Breite zwischen 500 und 1500 mm in vorgegebene Abmessungen zu schneiden, umfassend zwei Messertrommeln mit endständigen rotierbaren Tragzapfen, beherrscht durch Steuermittel. Die Trommeln sind zwischen Seitenteilen eines Scherenrahmens gelagert und besitzen externe Antriebsmittel einschliesslich Getriebeanordnungen mit äusseren Zahnrädern, welche die Trommeln miteinander antreiben.

Die DE 41 28 970 A1 beschreibt eine Abschervorrichtung mit einer oberen und einer unteren Trommel, die jeweils mit einer Klinge versehen und voneinander durch einen Hydraulikzylinder beabstandet sind, bis die Drehgeschwindigkeit der Trommeln auf einen vorgegebenen Wert beschleunigt worden ist.

Dann werden die Trommeln durch den Zylinder einander genähert, sodass an den Wellen der entsprechenden Trommeln angeordnete Zahnräder miteinander in Eingriff kommen, um zwischen den Klingen einen konstanten Spalt einzuhalten. Die Klingen werden an die Vorschublinie des abzuschneidenden Streifens angenähert, um den Streifen abzuschneiden.

Die DE-OS 196 37 862 A1 beschreibt eine Hochgeschwindigkeitsschere zum Querteilen von Walzband. Es handelt sich dabei um eine fliegende Schere mit auf einander gegenüberstehenden Trommeln angeordneten Messerkanten, die auf Vorschubgeschwindigkeit des zu schneidenden Bandes beschleunigbar und zur Durchführung eines Schnittes gegeneinander anstellbar sind.

Sie sind dadurch gekennzeichnet, dass die einander gegenüberliegenden Trommeln durch mindestens eine ihnen zugeordnete Antriebsvorrichtung auf eine Geschwindigkeit des zu schneidenden Bandes entsprechende Umfangsgeschwindigkeit beschleunigbar sind, und dass mindestens einer der Trommeln eine separat ansteuerbare Anstellvorrichtung zugeordnet ist. Mindestens eine der Trommeln ist auf Schwingen gelagert, die mit den Anstellvorrichtungen verbunden sind.

Eine der Trommeln ist mit einem Messer ausgestattet, das mit einem als Amboss wirkenden Mantelbereich der zweiten Trommel zusammenwirkt, wobei die Umfangsgeschwindigkeit von Trommeln auf die Bandvorschubgeschwindigkeit synchronisierbar ist.

Die Wo 99/46 076 beschreibt eine fliegende Schere für dünnes Warmband.
Diese soll so ausgebildet werden, dass sehr schnell laufendes Band sicher geschnitten wird. Dazu wird vorgeschlagen, dass eine der Schneidwerkzeugtrommeln auf einer Schwinge gelagert ist, dass eine Anstellvorrichtung aus die Schneidbewegung bewirkenden Antrieben und zwischen diesen und den Schwingen angeordneten Stützelementen besteht, und dass die Stützelemente auf eine Schnitte bewirkende Wirkstellung verkürzbar sind.

Aus dem Dokument US 6,032,560 A, das als nächstliegender Stand der Technik betrachtet wird, ist eine Hochgeschwindigkeitsschere bekannt mit außerhalb des Scherengehäuses angeordneten anstellbaren Messerscheiben, deren Antriebswellen in Exzenterbuchsen gelagert sind. Die Antriebswellen sind getriebetechnisch verbunden. Eine der Antriebswellen ist mit einem Antriebsmotor gekoppelt. Die Verstellung der Exzenterbuchsen erfolgt mittels einer Kupplungs- und Bremsvorrichtung, die mit einer der Antriebswellen zahnradverbunden ist.

Ausgehend vom vorgenannten Stand der Technik ist es die Aufgabe der vorliegenden Erfindung, eine Hochgeschwindigkeitsschere der eingangs genannten Gattung zum Teilen von Kalt- und/oder Warmband mittels wenigstens einer Messertrommel, die in einem Scherengehäuse anstellbar gelagert sind, dahingehend konstruktiv zu verbessern, daß ein größerer Aufgang der Messertrommeln ermöglicht wird, so daß der Durchlauf von einem gegebenenfalls aufgebogenem Bandkopf und welligem Walzband ermöglicht wird und gleichwohl eine exakte Synchro-nisation der Messertrommeln beim Schneiden des kalt- und/oder warmgewalzten Bandes gewährleistet ist.

Die Aufgabe wird durch die Merkmale des Anspruchs 1 gelöst, wodurch eine Vorsynchronisation der Messertrommeln erreicht wird.

Weitere Ausgestaltungen der Erfindung werden in den abhängigen Ansprüchen offenbart.

Die Erfindung wird nachfolgend anhand einiger perspektivischer Darstellungen sowie Schnittzeichnungen näher beschrieben. Es zeigen:
- Figur 1: ein Funktionsschema der erfindungsgemäßen Hochgeschwindigkeitsschere;
- Figur 2: eine Ansicht der abständsveränderlichen Position beider Messertrommeln;
- Figur 3: in Ansicht die Exzenteranordnung;
- Figur 4: eine perspektivische Ansicht der Schere schräg von vorn;
- Figur 5: eine perspektivische Ansicht der Schere schräg von hinten;
- Figur 6: die Schere im Schnitt einer Ebene entlang der Achse der Messertrommeln;
- Figur 7: eine perspektivische Ansicht der Schere in einem Scherengehäuse;
- Figur 8: eine Ansicht der Schere im Schnitt einer Ebene entlang der Ausgleichswellen.

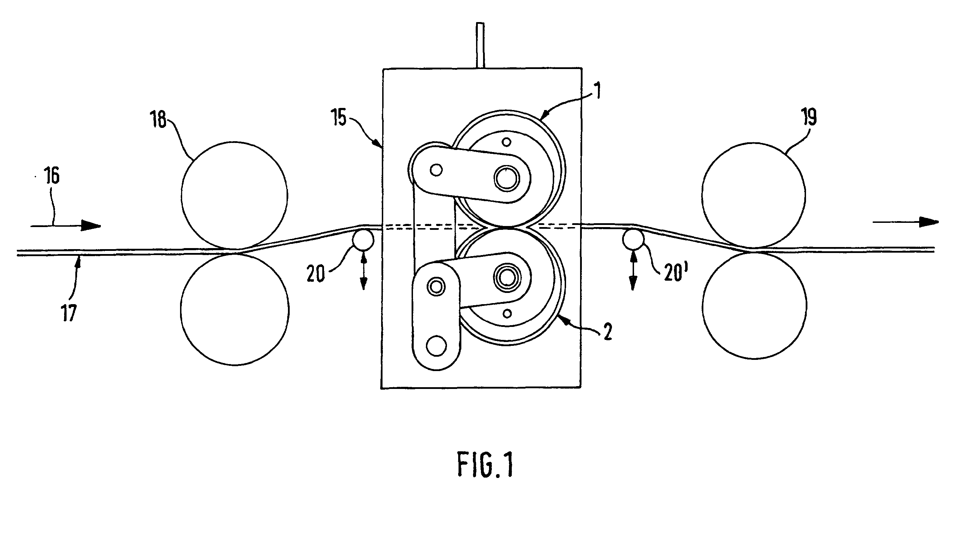

Das in Figur 1 dargestellte Funktionsschema der erfindungsgemäßen Hochgeschwindigkeitsschere zum Querteilen von kalt- und/oder warmgewalzten Walzband umfaßt eine erste Messertrommel 1 und eine zweite Messertrommel 2, die innerhalb eines Scherengehäuses 15 gelagert sind. In Laufrichtung 16 des Walzbandes 17, vor und hinter dem Scherengehäuse 15, sind Treiber 18, 19 vorgesehen, die das Walzband 17, unter Längsspannung vor und hinter den Messertrommeln 1, 2, durch den Trommelspalt hindurch führen, wobei das unter Zugspannung stehende Walzband 17, bei seinem Transport durch die Hochgeschwindigkeitsschere auf Überführungsrollen 20, 20' gelagert ist, die das Walzband anheben, bzw. absenken können.

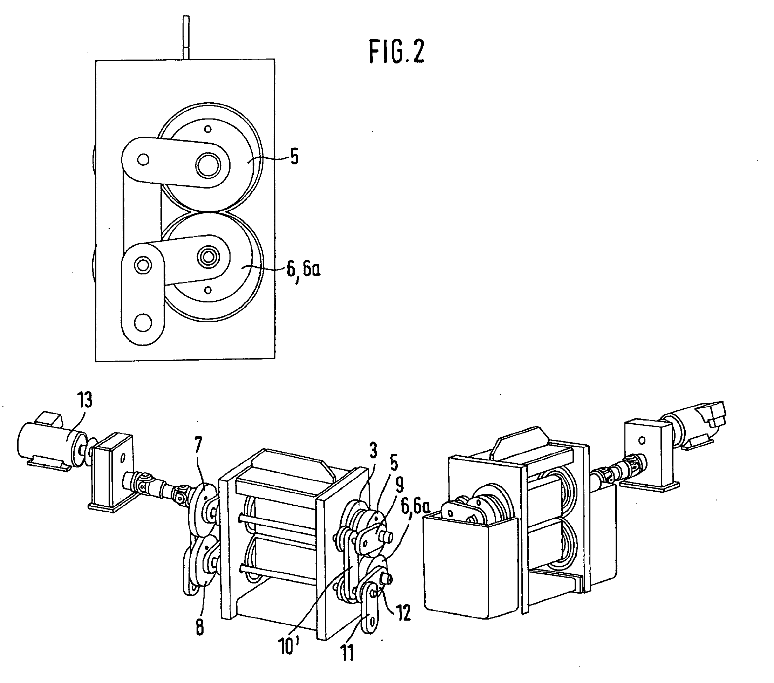

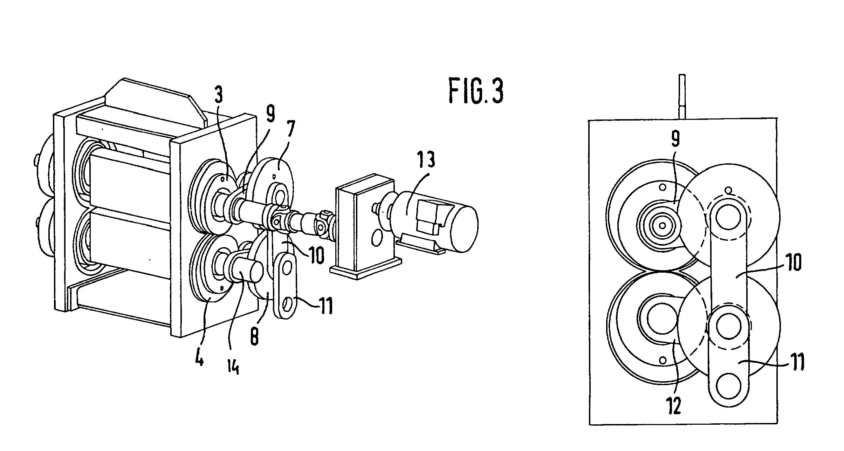

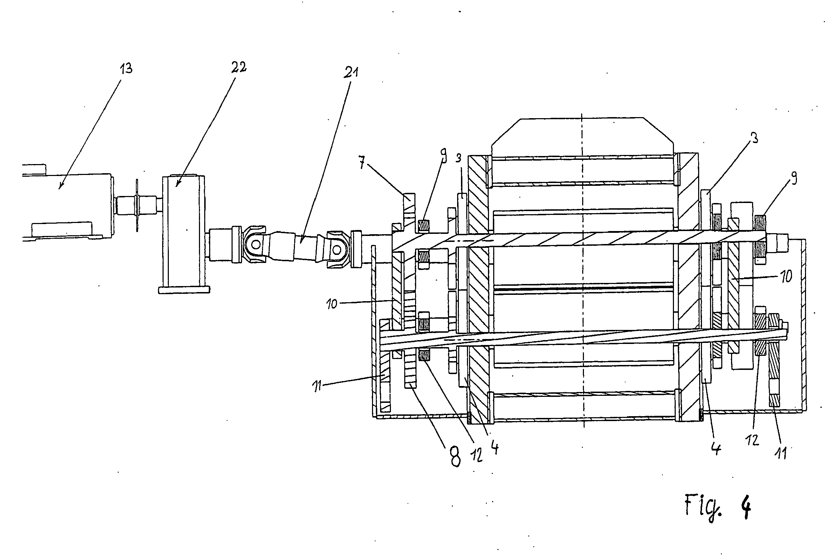

In den Figuren 2 und 3 ist gezeigt, daß die Messertrommeln 1, 2 in Exentern 3, 4 heb- und senkbar, das heißt anstellbar, gelagert sind. Der Antrieb der Exenter 3 erfolgt gemäß Figur 4über eine Ausgleichswelle 7, die von der ersten Trommelwelle 1 angetrieben wird. Eine zweite Ausgleichswelle 8 wird von der ersten Ausgleichswelle 7 angetrieben. Die zweite Ausgleichswelle 8 treibt die zweite Messertrommel 2 an. Somit erfolgt der Kraftfluß von der ersten Messertrommel 1 auf die erste Ausgleichswelle 7, von dieser auf die zweite Ausgleichswelle 8 und von dort auf die zweite Messertrommel.

Die Ausgleichswellen 7, 8 sind entsprechend Figur 4 so angeordnet, daß sie immer den gleichen Achsenabstand zu den Messertrommeln 1, 2 sowie untereinander haben. Realisiert ist dies durch einen Hebelmechanismus mit den Elementen 9 bis 12. Der konstante Achsenabstand läßt ein geringes Zahnspiel in den Verzahnungen zu. Dadurch wird eine Vorsynchronisation der Messertrommeln 1, 2 erreicht.

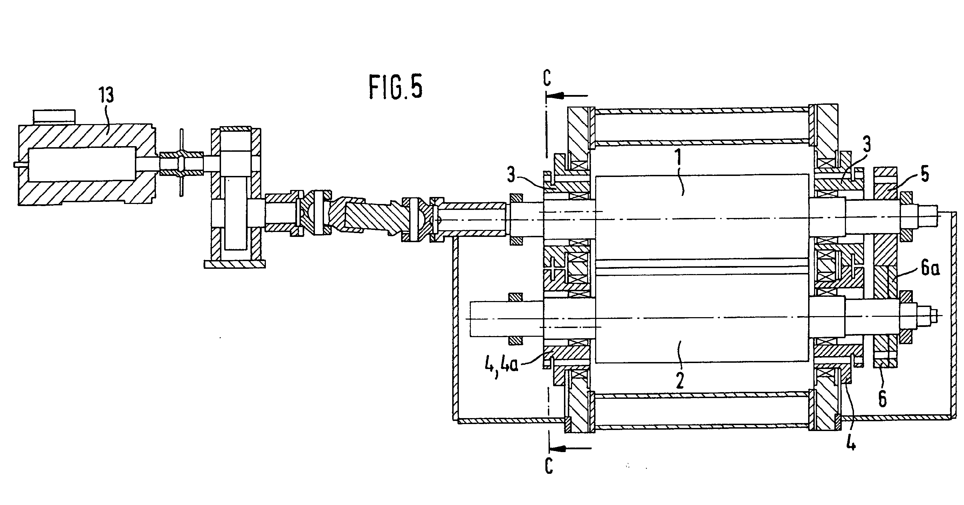

Die erste Ausgleichswelle 7 treibt entsprechend den Figuren 5 und 6 die erste Exenterbuchse 3 an, die erste Exenterbuchse 3 treibt die zweite Exenterbuchse 4 an. Beide Exenterbuchsen werden durch Einstellräder 4a gegeneinander verspannt. Somit ist gewährleistet, daß beide Trommeln im Schnitt exakt positioniert sind.

Kurz vor dem Schnitt kommt die Verzahnung der auf der Messertrommel 1, 2 sitzenden Kammräder 5, 6 in den Eingriff. Diese Verzahnung wird verspannt durch ein federbetätigtes Einstellrad 6a auf der zweiten Messertrommel 2. Der Kraftfluß erfolgt spielfrei direkt über die Kammräder.

Eine der Messertrommeln 1, 2, in dem Zeichnungsbeispiel die Messertrommel 1 hat einen Drehantrieb mittels Elektromotor 13 über eine herkömmliche Gelenkwelle 21 und ein zwischengeschaltetes Getriebe 22. Es kann auch eine andere Antriebsart als mit Elektromotor gewählt werden. Die andere Messertrommel 2 hat eine Bremse 14, vorzugsweise eine elektrische Bremse 14. Damit wird sichergestellt, daß keine Ablösung der Lastflanken und kein ungewollter Flankenwechsel stattfinden kann.

Die Anstellung der einen Messertrommel 1 oder auch beider Messertrommeln 1, 2, vorzugsweise mittels der Exenter 3, 4, kann elektrisch oder mechanisch mit dem Drehantrieb 13 für die eine Messertrommel 2 synchronisiert sein. Die Messertrommeln 1, 2 können zum Schnitt auf die hohe Bandgeschwindigkeit mit gleichzeitiger Synchronisation der Zustellbewegung, über mehrere Umdrehungen beschleunigt werden, oder die Messertrommeln 1, 2 drehen mit der aktuellen Bandgeschwindigkeit und werden nur zugestellt.

In geöffneter Position und während der Zustellung berühren die Messer der Messertrommeln das Walzband nicht.

Die Figuren 4 und 5 zeigen in vergrößerter Darstellung und aus unterschiedlichen Blickwinkeln und/oder Schnittebenen die erfindungsgemäße Hochgeschwindigkeitsschere mit den einzelnen Bauelementen. In den Figuren 4 und 5 sind besonders deutlich die beiden Ausgleichswellen 7 und 8 zu erkennen, die miteinander getriebetechnisch verbunden sind, sowie die Bauelemente 9 bis 12 des Hebelmechanismus, mit dem bewirkt wird, daß die Ausgleichswellen 7, 8 immer so angeordnet sind, daß diese den gleichen Achsenabstand zu den Messertrommeln 1, 2 sowie untereinander haben. Figur 6 zeigt die Exenterbuchsen 4, 4a und auf der Gegenseite das federbetätigte Einstellrad 6a auf der zweiten Messertrommel 2.

Die zuvor beschriebene und in den Figuren dargestellte Hochgeschwindigkeitssschere eignet sich insbesondere zum Trennen von kalt- und/oder warmgewalzten Walzband der Dicke 0,15 mm bis 6 mm bei Bandbreiten bis 2.500 mm und Schnittgeschwindigkeiten bis 30 m/sec. Mit großem Vorteil ermöglicht die erfindungsgemäße konstruktive Ausführung der Hochgeschwindigkeitsschere den größeren Aufgang der Messertrommeln 1, 2 beim Durchlauf eines beispielsweise hochgebogenen Bandkopfes und ermöglicht ein problemloses Schneiden von welligem Walzband. Die Lagerung der Messertrommeln 1, 2 und der Exenter 3, 4, sowie der Ausgleichswellen 7, 8 im Scherengehäuse 15 ermöglicht eine kompakte Konstruktion. Die Synchronisation beider Messertrommeln 1, 2 durch die Ausgleichswellen 7, 8 ergeben einen erheblichen Fortschritt. Die Hauptsynchronisation der Messertrommeln 1, 2 erfolgt vorteilhafterweise durch federbetätigte Kammräder.

### Liste der Bezugszeichen

- 1: Messertrommel
- 2: Messertrommel
- 3: Exzenter/Buchse, erste
- 4: Exzenter/Buchse, zweite
- 4a: Einstellrad
- 5: Kammrad
- 6: Kammrad
- 6a: Einstellrad
- 7: Ausgleichswelle
- 8: Ausgleichswelle
- 9: Hebelmechanismus
- 10: Hebelmechanismus
- 11: Hebelmechanismus
- 12: Hebelmechanismus
- 13: Elektromotor
- 14: Bremse
- 15: Scherengehäuse
- 16: Laufrichtung Band
- 17: Walzband
- 18: Treiber
- 19: Treiber
- 20: Überführungsrollen
- 20': Überführungsrollen
- 21: Gelenkwelle
- 22: Antriebsgetriebe

## Patentansprüche

1. Hochgeschwindigkeitsschere zum Teilen bzw. Trennen von Kalt- und/oder Warmband mittels wenigstens einer Messertrommel, die in einem Scherengehäuse anstellbar gelagert ist und die von einer Welle (21) antreibbar ist, welche ihrerseits mit einem Drehantrieb (13) in Verbindung steht, wobei zwei Messertrommeln (1, 2) im Scherengehäuse (15) in Exzenterbuchsen (3, 4) anstellbar gelagert sind, **dadurch gekennzeichnet, dass** die Exzenterbuchsen (3, 4) jeweils über eine Ausgleichswelle (7, 8) antreibbar sind und die Ausgleichswellen (7, 8) getriebetechnisch miteinander verbunden sind und dass die Ausgleichswellen (7, 8) so angeordnet sind, dass sie mittels eines Hebelmechanismus (9 bis 12) unverändert den gleichen Achsenabstand zu den Messertrommeln (1, 2) sowie untereinander haben und dass der Antrieb der Exzenterbuchse (3) über die Ausgleichswe Ile (7) erfolgt, die von der ersten Messertrommel (1) angetrieben wird und dass die zweite Ausgleichswelle (8) von der ersten Ausgleichswelle (7) angetrieben wird und die zweite Ausgleichswelle (8) die zweite Messertrommel (2) antreibt, so dass der Kraftfluß von der ersten Messertrommel (1) auf die erste Ausgleichswelle (7),von dieser auf die zweite Ausgleichswelle(8) und von dort auf die zweite Messertrommel (2) erfolgt.

2. Hochgeschwindigkeitsschere nach Anspruch 1,
**dadurch gekennzeichnet,**
**daß** die Exzenterbuchsen (3, 4) beispielsweise mittels wenigstens eines federbetätigten Einstellrades (6a) gegeneinander verspannt sind.

3. Hochgeschwindigkeitsschere nach Anspruch 1 oder 2,
**dadurch gekennzeichnet,**
**daß** die eine Messertrommel (1) mit dem Drehantrieb (13) und die andere Messertrommel mit einer Bremse (14), vorzugsweise einer elektrischen Bremse verbunden ist.

## Claims

1. High-speed cutter for dividing or separating cold and/or hot strip by means of at least one knife drum, which is adjustably mounted in a cutter housing and is drivable by a shaft (21), which in tum is connected with a rotary drive (13), wherein two knife drums (1, 2) are adjustably mounted in the cutter housing (15) in eccentric bushes (3, 4), **characterised in that** the eccentric bushes (3, 4) are each drivable by way of a compensating shaft (7, 8) and the compensating shafts (7, 8) are connected together by gearing and that the compensating shafts (7, 8) are so arranged that by means of a lever mechanism (9 to 12) they have without changed the same axial spacing from the knife drums (1, 2) as well as from one another and that the drive of the eccentric bush (3) takes place by way of the compensating shaft (7), which is driven by the first knife drum (1), and that the second compensating shaft (8) is driven by the first compensating shaft (7) and the second compensating shaft (8) drives the second knife drum (2), so that the force flow takes place from the first knife drum (1) to the first compensating shaft (7), from this to the second compensating shaft (8) and from there to the second knife drum (2).

2. High-speed cutter according to claim 1, **characterised in that** the eccentric bushes (3, 4) are tightened relative to one another by means of, for example, at least one spring-actuated setting wheel (6a).

3. High-speed cutter according to claim 1 or 2, **characterised in that** one knife drum (1) is connected with the rotary drive (13) and the other knife drum with a brake (14), preferably an electric brake.

## Revendications

1. Cisaille haute vitesse pour subdiviser ou séparer une bande à froid et/ou à chaud au moyen d'au moins un tambour à couteaux qui est monté de façon approchable dans un boîtier de cisaille et qui est susceptible d'être entraîné par un arbre (21) qui est à son tour en liaison avec un entraînement de rotation (13), dans laquelle deux tambours à couteaux (1, 2) sont montés de façon approchable dans le boîtier de cisaille (15) dans des douilles excentriques (3, 4),
**caractérisée en ce que**
les douilles excentriques (3, 4) sont susceptibles d'être entraînées respectivement via un arbre de compensation (7, 8) et les arbres de compensation (7, 8) sont reliés l'un à l'autre en termes de transmission, et **en ce que** les arbres de compensation (7, 8) sont agencés de manière à présenter de façon inchangée le même entraxe par rapport aux tambours à couteaux (1, 2) et également l'un par rapport à l'autre au moyen d'un mécanisme à leviers (9 à 12), et **en ce que** l'entraînement de la douille excentrique (3) s'effectue via l'arbre de compensation (7) qui est entraîné par le premier tambour à couteaux (1), et le second arbre de compensation (8) est entraîné par le premier arbre de compensation (7) et le second arbre de compensation (8) entraîne le second tambour à couteaux (2), de telle sorte que le flux des forces depuis le premier tambour à couteaux (1) vers le premier arbre de compensation (7) s'effectue depuis celui-ci vers le second arbre de compensation (8) et depuis ce dernier vers le second tambour à couteaux (2).

2. Cisaille haute vitesse selon la revendication 1,
**caractérisée en ce que**
les douilles excentriques (3, 4) sont serrées l'une par rapport à l'autre par exemple au moyen d'au moins une roulette de réglage (6a) actionnée par un ressort.

3. Cisaille haute vitesse selon la revendication 1 ou 2,
**caractérisée en ce que**
l'un des tambours à couteaux (1) est relié à l'entraînement en rotation (13) et l'autre tambour à couteaux est relié à un frein (14), de préférence à un frein électrique.
